Europäisches Patentamt

European Patent Office

Office européen des brevets

(19)

(11) Veröffentlichungsnummer : **0 178 262**
**B1**

(12) **EUROPÄISCHE PATENTSCHRIFT**

(45) Veröffentlichungstag der Patentschrift :
20.09.89

(51) Int. Cl.⁴ : **H 01 S   3/03**, H 01 S   3/097

(21) Anmeldenummer : **85810459.9**

(22) Anmeldetag : **08.10.85**

(54) Verfahren zur Erhöhung der Leistung eines Axial-Gaslasers und Axial-Gaslaser zur Ausführung des Verfahrens.

(30) Priorität : **10.10.84 CH 4861/84**

(43) Veröffentlichungstag der Anmeldung :
**16.04.86 Patentblatt 86/16**

(45) Bekanntmachung des Hinweises auf die Patenterteilung : **20.09.89 Patentblatt 89/38**

(84) Benannte Vertragsstaaten :
**AT BE CH DE FR GB IT LI NL SE**

(56) Entgegenhaltungen :
EP--A-- 0 080 715
EP--A-- 0 130 346
US--A-- 3 428 914
US--A-- 4 470 144
JOURNAL OF APPLIED PHYSICS, Band 45, Nr. 9, September 1974, Seiten 3934-3936, American Institute of Physics, New York, US; J.A. SHIRLEY et al.: "Stimulated emission from carbon monoxide transitions below 5 muM excited in supersonic electric discharge"
PATENTS ABSTRACTS OF JAPAN, Band 8, Nr. 39, Seite (E-228) [1476], 21. Februar 1984 & JP-A-58 196 080
Die Akte enthält technische Angaben, die nach dem Eingang der Anmeldung eingereicht wurden und die nicht in dieser Patentschrift enthalten sind.

(73) Patentinhaber : **PRC CORPORATION**
**North Frontage Road**
**Landing, NJ 07850 (US)**

(72) Erfinder : **Weiss, Hardy P., Dr.**
**Im Seeblick**
**CH-8821 Hütten (CH)**

(74) Vertreter : **Troesch, Hans Alfred, Dr. Ing. et al**
**Walchestrasse 19**
**CH-8035 Zürich (CH)**

## Beschreibung

Die vorliegende Erfindung betrifft ein Verfahren zur Erhöhung der Leistung eines Axial-Gaslasers mit einem gasdurchströmten Erregungsrohr, einen Axial-Gaslaser mit mindestens einem gasdurchströmten Erregungsstreckenrohr zur Ausführung des Verfahrens und ein Erregungsstreckenrohr für einen Axial-Gaslaser.

Der Hauptabschnitt eines Erregungsstreckenrohres ist bei Axial-Gaslasern üblicherweise als gerades Rohr ausgebildet. Mit zunehmender Distanz vom Gaseinlass bildet sich an der Rohrperipherie eine sog. Strömungsgrenzschicht aus, welche durch die Zähigkeitskräfte in der Gas- bzw. Gasgemischströmung bedingt ist. Innerhalb dieser Grenzschicht nimmt die Strömungsgeschwindigkeit des Gases von einem Maximalwert, im Rohrzentrum, auf Null ab, an der Rohrwandung. Die Dicke dieser Grenzschicht wächst in Strömungsrichtung. Es bleibt mithin immer weniger freier Raum für die ungestörte Strömung, womit stromabwärts die Gasgeschwindigkeit zunehmen muss. Mit zunehmender Gasgeschwindigkeit wachsen aber wiederum die Zähigkeitskräfte und damit die Grenzschicht, letztere somit überproportional mit Bezug auf die Länge der Erregungsstrecke. Wird nun in diesem Rohr dem Gas bzw. Gasgemisch noch Wärme zugeführt, wie dies durch die elektrische Anregung der Fall ist, so nimmt die Gasdichte ab bzw. das Gasvolumen zu, die Strömungsgeschwindigkeit des Gases wird grösser, was wiederum das Wachstum der Grenzschicht begünstigt. Bezüglich der Gasgeschwindigkeit entlang der Erregungsstrecke können im geraden Rohr grundsätzlich drei Fälle unterschieden werden :

1) Das Gas tritt mit Unterschallgeschwindigkeit in das gerade Rohr ein und erreicht genau am Austritt Schallgeschwindigkeit.

2) Das Gas tritt mit Ueberschallgeschwindigkeit ein und wird auf Schallgeschwindigkeit am Rohrende verzögert.

3) Das Gas tritt mit Ueberschallgeschwindigkeit ein und wird in einem Verdichtungsstoss auf Unterschallgeschwindigkeit verzögert und anschliessend bis zum Rohrende auf Schallgeschwindigkeit beschleunight.

Mit zunehmender Wärmezufuhr ist somit in allen Fällen vorerst mit einem Uebergang von Unterschallgeschwindigkeit zu Ueberschallgeschwindigkeit zu rechnen, was jedoch in einem geraden Rohr konstanten Querschnitts aus physikalischen Gründen nicht möglich ist. Ueberschreitet die Wärmezufuhr einen kritischen Wert, der den genannten Geschwindigkeitsübergang bewirken würde, so tritt das sog. « thermal chocking » auf, das Rohr wird verstopft. Die aussetzende Strömung setzt erst wieder nach Unterbruch der Wärmezufuhr ein. Deshalb ist man in der Leistungszufuhr an herkömmlichen Gaslasern mit den genannten Erregungsstreckenrohren durch physikalische Erscheinungen eingeschränkt, somit auch in der Strahlleistung.

In der Patentanmeldung EP-A-0 130 346, die Stand der Technik nach Art. 54 (3) EPÜ darstellt, ist ein Axialstrom-Gaslaser beschrieben, bei welchem entlang des Erregungsrohres unstetige Querschnittserweiterungen und Wiedereinschnürungen vorgesehen sind, worin zusätzlich Blenden angeordnet sind. Mit diesen plötzlichen unstetigen Erregungsrohrquerschnittserweiterungen wird eine Verwirbelung des im Erregungsrohr strömenden Gases angestrebt, um durch Homogenisierung der Gaserregung im Erregungsrohr eine höhere Laser-Ausgangsleistung zu erwirken. Diesbezüglich ähnlich gelagert schlägt die US-PS 4 470 144 vor, an einem Axial-Gaslaser den Durchmesser des gasdurchströmten Erregungsrohres an der Gaseinlass- und Gasauslasszone abrupt zu ändern.

Es ist nun Aufgabe der vorliegenden Erfindung, ein Verfahren obgenannter Art vorzuschlagen, bei welchem die genannten Grenzschichtprobleme behoben werden. Es soll mithin bei einer gegebenen Querschnittsfläche, wie im Gaseinlassbereich zur Erregungsstrecke, erzielt werden, dass, vereinfacht, das Gas entlang der Erregungsstrecke in zunehmendem Masse Wärme aufnehmen kann, ohne entlang der Strecke von Unterschall- auf Ueberschallgeschwindigkeit gezwungen zu werden.

Dies wird durch das Verfahren nach Anspruch 1 erreicht.

Durch stetige Vergrösserung der Innenquerschnittsfläche des Erregungsrohres in Gasströmungsrichtung wird gezielt, und unter Berücksichtigung der entstehenden Grenzschicht, der verbleibende wirksame Strömungsquerschnitt wieder aufgeweitet. Dabei wird die Vergrösserung dieser Querschnittsfläche selbstverständlich nach Massgabe entlang der Strecke zu erzielender Verläufe physikalischer Parameter bestimmt. Solche Parameter können insbesondere Gasgemischdruck bzw. -Temperatur und allenfalls, davon abhängig, Grössen, wie die Machzahl etc., sein.

Die zu erzielenden Verläufe werden dabei vorzugsweise durch mindestens genäherte Realisierung der Querschnittsflächenvergrösserung nach dem Wortlaut des Anspruchs 2 realisiert, unter Berücksichtigung, dass es sich üblicherweise beim eingesetzten Gas um ein Gasgemisch handelt und somit dessen Gaszustandsgleichung zu berücksichtigen ist. Es ist aus dem oben Gesagten plausibel, dass, mit Erhöhung der zugeführten Wärme, die Grenzschicht zunimmt, diese Grenzschichtzunahme durch die Aufweitung des Erregungsstreckenrohres kompensiert wird, derart, dass auch bei weiterer Wärmezufuhr das strömende Gas nicht den kritischen Geschwindigkeitsübergang von Unter- auf Ueberschallgeschwindigkeit vollziehen muss. Auswertung des Ausdruckes gemäss Anspruch 2 ergibt für den Spezialfall konstant zu haltenden Druckes im Gas den qualitativ im Anspruch 3 angegebenen Querschnittsflächenverlauf.

Ein Axial-Gaslaser, der zur Realisation des genannten Verfahrens aufgebaut ist, zeichnet sich nach dem Wortlaut des Anspruchs 4 aus, ein Erregungsstreckenrohr hierfür nach dem Wortlaut des Anspruchs 9.

Um im weiteren eine gleichmässige Strömung entlang des Erregungsstreckenrohres sicherzustellen, kann das Entstehen grossräumiger Turbulenzen verhindert und gleichzeitig das Entstehen eine Durchmischung fördernder kleiner Turbulenzen gefördert werden, dadurch, dass das Rohr mindestens einen Abschnitt umfasst, der einen von einer Kreisform abweichenden Leitungsquerschnitt aufweist, beispielsweise dreieckförmig, viereckig, elliptisch etc. ist. Durch diese Formgebung wird eine Einzelturbulenzbildung am erfindungsgemässen Rohr allenfalls verhindert.

Eine weitere Massnahme am erfindungsgemässen Rohr besteht darin, dass für den Einsatz an einem elektrisch angeregten Laser, daran eine Elektrodenanordnung vorgesehen wird, die radial-absatzfrei und -spaltfrei am Umfang der Innenwandung des Rohres liegt. Dadurch wird auch durch Einführen der Elektrodenzum Anlegen des elektrischen Feldes entlang des Erregungsstreckenrohres, die genannte grossräumige Turbulenzbildung vermieden.

Die Erfindung wird anschliessend beispielsweise anhand von Figuren erläutert.

Es zeigen :

Fig. 1 eine prinzipielle Darstellung eines « zweistufigen » Hochleistungsgaslasers zur Erläuterung der Ansiedlung der erfindungsgemässen Massnahmen an einem derartigen ein- oder mehrstufigen Laser, wobei beispielsweise ein elektrisch angeregter Axial-Laser dargestellt ist,

Fig. 2a qualitativ die Strömungsverhältnisse an einem bekannten Erregungsstreckenrohr,

Fig. 2b die Verhältnisse qualitativ an einem erfindungsgemässen Erregungsstreckenrohr,

Fig. 2c qualitativ die Abhängigkeit von Querschnittsflächen der Anordnung gemäss Fig. 2b, entlang einer Rohrlängskoordinate X, bei konstant zu haltendem Gasdruck p(x),

Fig. 3a-c erfindungsgemäss grossvolumige Turbulenzen verhindernde Querschnittsformen des erfindungsgemässen Erregungsstreckenrohres gemäss Fig. 2,

Fig. 4 einen Ausschnitt des Rohres nach Fig. 2b mit an der Rohrwandung angeordneter Elektrode.

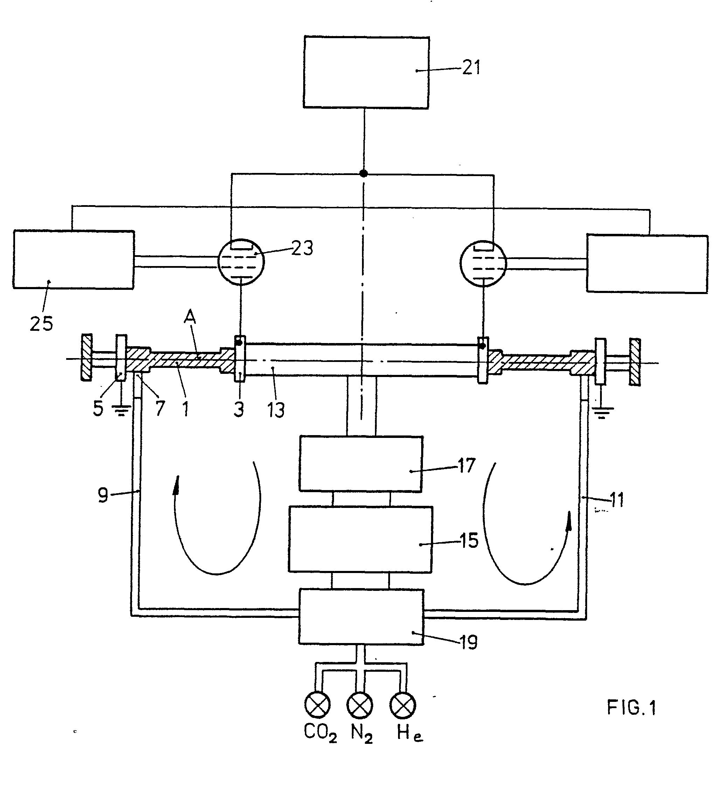

In Fig. 1 ist prinzipiell die Anordnung eines elektrisch angeregten Axial-Hochleistungsgaslasers dargestellt. Es handelt sich dabei um einen « Zweistufen »-Laser, mit einer ersten Stufe links der strichpunktierten Markierung und einer zweiten Stufe rechts davon. Da es sich mit Bezug auf diese Markierung um spiegelbildlich angeordnete, identische Stufen handelt, wird lediglich die Stufe links beschrieben. Die Anordnung umfasst ein Erregungsstreckenrohr 1, an dessen Enden Kathode 3 und Anode 5 angeordnet sind. Am einen Ende des Erregungsstreckenrohres 1 mündet, an einer Einlasszone 7, ein Einlassrohr 9 in das Erregungsstreckenrohr 1 ein, am anderen Ende mündet ein Auslassrohr 11 aus einer Auslasszone 13 des Erregungsstreckenrohres 1 aus. Mit Hilfe eines Gebläses 15, welchem Wärmetauscher 17 und 19 vor- bzw. nachgeschaltet sind, wird ein Gasgemisch, wie z. B. aus Kohlendioxid, Stickstoff und Wasserstoff durch das Erregungsstreckenrohr 1 in der mit dem Pfeil angegebenen Richtung getrieben. Die Zentralachse A des beidseitig offenen Erregungsstreckenrohres ist gleichzeitig die optische Achse des Laserstrahles. Wie weiter dargestellt, werden die Elektroden 3 und 5 über eine Hochspannungsquelle 21, ein Stellglied 23, beispielsweise in Form einer Röhre, betrieben, wobei mit Hilfe der Röhre 23 und einer sie ansteuernden Stromregulierung der Elektrodenstrom eingestellt wird.

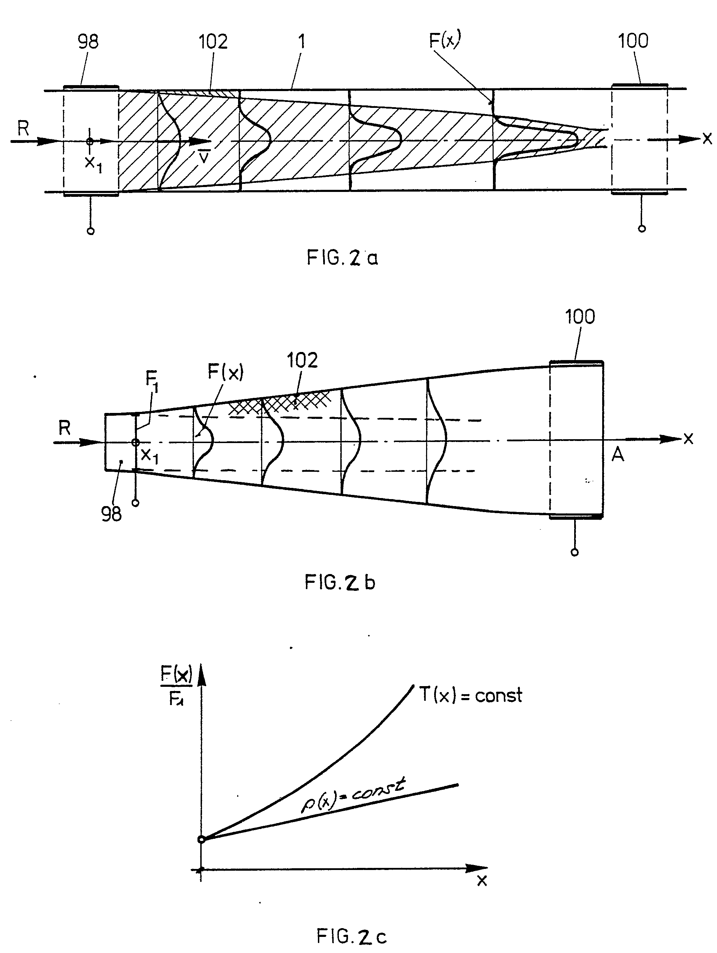

In Fig. 2a ist ein herkömmliches gerades Erregungsstreckenrohr 1 mit schematisch eingetragener Anode 98 bzw. Kathode 100 dargestellt. Mit zunehmender Distanz x von der Einlasszone bzw. der Anodenzone bildet sich eine Strömungsgrenzschicht 102 aus, welche durch Zähigkeitskräfte in der Strömung bedingt ist. Wie aus den über der Querschnittsfläche F eingetragenen, qualitativen Strömungsgeschwindigkeitsprofilen entlang der Koordinate x ersichtlich, nimmt die Geschwindigkeit $\bar{V}$ von einem x-abhängigen Maximalwert im Rohrzentrum auf Null an der Rohrwandung ab. Wie weiter ersichtlich, nimmt die Dicke der Grenzschicht 102 in Strömungsrichtung R entsprechend zunehmendem x zu. Aus den eingetragenen Strömungsprofilen erkennbar, nimmt der Gastransport-wirksame Rohrquerschnitt somit mit zunehmender x-Koordinate ab, es bleibt immer weniger freier Raum für die ungestörte Gasströmung. Aus Kontinuitätsüberlegungen folgt, dass die Gasgeschwindigkeit im verbleibenden transportwirksamen Strömungsquerschnitt zunimmt, was wiederum ein Zunehmen der Zähigkeitskräfte bewirkt, mit weiterer Zunahme der Grenzschicht. Es handelt sich somit um ein im Sinne einer Mitkopplung sich aufwiegendes System. Wird nun, wie dies mit Anlegen eines axialen elektrischen Feldes der Fall ist, dem Gas im Erregungsstreckenrohr zusätzlich Wärme zugeführt, so nimmt das Gasvolumen zu, mithin die Strömungsgeschwindigkeit und damit wiederum die Grenzschicht. Der Geschwindigkeitszunahme im Rohr ist durch den Uebergang von Unterschall- auf Ueberschallgeschwindigkeit eine nicht überwindbare Grenze gesetzt. Dieses Phänomen, hier rein heuristisch dargelegt, ist als « thermal chocking » (therm. Verstopfung) bekannt.

In Fig. 2b ist nun qualitativ die Ausbildung eines erfindungsgemässen Erregungsstreckenrohres dargestellt. Wie ersichtlich, divergiert in Gasströmungsrichtung R bzw. mit zunehmender Ortskoordinate x, die Innenquerschnittsfläche F(x) des Rohres mit Bezug auf die kleinste Querschnittsfläche $F_1$, wie zu Beginn des Erregungsstreckenrohres. Durch diese aufweitung, nach noch zu beschreibenden Gesetzmässigkeiten gefunden, wird erreicht, dass wohl die Grenzschicht mit zunehmender Ortskoordinate x zunimmt, was jedoch nicht unbedingt eine Zunahme der Strömungsgeschwindigkeit des Gases, in Abhängigkeit der Ortskoordinate x nach sich zieht, da der durch die zunehmende Grenzschicht reduzierte transport-wirksame Querschnitt durch die Aufweitung des Rohres kompensiert wird. Damit kann mit Bezug auf die Ausführung gemäss Fig. 2a bei gleichbleibender kleinster Rohrquerschnittsfläche $F_1$ — entsprechend der konstanten Fläche F von Fig. 2a — in der Ausführung gemäss Fig. 2b dem Gas wesentlich mehr Wärme zugeführt werden, ohne dass der kritische Geschwindigkeitsübergang und damit eine Verstopfung des Rohres im obgenannten Sinne erfolgen bzw. einsetzen müsste. Damit kann bei einem erfindungsgemäss ausgebildeten Erregungsstreckenrohr wesentlich mehr Leistung elektrisch zugeführt werden und entsprechend ergibt sich eine wesentlich höhere Laserstrahlleistung.

Die Formgebung des Erregungsstreckenrohres wird nach gewünschten Verläufen physikalischer Parameter der Erregungsstrecke in Funktion der x-Koordinate bestimmt. Grundsätzlich wird hierzu der Ausdruck

$$\ln\left[\frac{F}{F_1}\right]^2 = \int_0^\xi \left[\frac{1 + M^2 \cdot \kappa}{\dfrac{c_p T_{10}}{q_2} + \xi}\right] d\xi + \ln\left\{\left[\frac{1 + \dfrac{\kappa - 1}{2} M^2(x)}{1 + \dfrac{\kappa - 1}{2} M_1^2}\right]^{\frac{\kappa + 1}{\kappa - 1}} \cdot \left[\frac{M_1}{M}\right]^2\right\}$$

ausgewertet, worin folgende Grössen unter Berücksichtigung ihrer allgemeinen x-Abhängigkeit bedeuten :

$M_1$ : die Machzahl an der engsten Querschnittsstelle $x_1$,

$F(x)$ : die Leitungsquerschnittsfläche am Ort x,

$F_1$ : die engste Querschnittsfläche,

$M(x)$ : die Machzahl am Ort x,

$T_{01}$ : die Gasruhetemperatur,

$\kappa(x)$ : den Isentropenexponenten am Ort x,

$c_p(x)$ : die spezifische Wärme des Gases am Ort x,

$q_2$ : die gesemthaft zugeführte Wärme,

$\xi(x)$ : die relativ zugeführte Wärme am Ort x, bezogen auf $q_2$.

Bei der Auswertung dieses Ausdruckes werden Querschnittsflächenveränderungsfunktionen ermittelt, in Abhängigkeit der Vorgabe von x-abhängigen Verlauf einer oder mehrerer der im Ausdruck eingehenden Grössen, wie des Gastruckes p(x) bzw. der Temperatur T(x) oder der Machzahl M(x) etc. des Gases. Beispielsweise ergibt die Auswertung des genannten Ausdruckes den qualitativ in Fig. 2c dargestellten Verlauf, der auf die engste Querschnittfläche $F_1$ normierten Rohrquerschnittsfläche F in Funktion der Ortskoordinate x für konstant zu haltenden Gasdruck p(x) entlang der Koordinate x oder im Falle konstanter Temperatur T, den dargestellten, exponentiell anwachsenden Verlauf. Im allgemeinen Fall kann die Lösung $F(x)/F_1$ nicht geschlossen erhalten werden, sondern wird vorzugsweise durch Rechnereinsatz numerisch für jeden x-Wert berechnet.

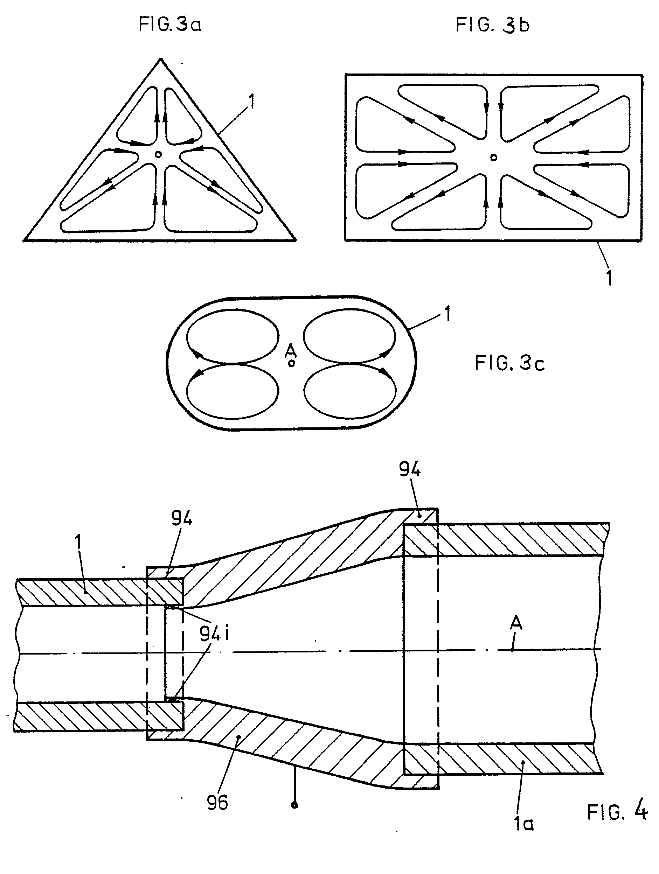

In den Fig. 3a bis 3c sind nun Massnahmen dargestellt, die am erfindungsgemässen Erregungsstreckenrohr gemäss Fig. 2 das allfällige Entstehen von Turbulenzen mit einem einzigen Zentrum über die jeweils betrachtete Querschnittsfläche, « grossräumige Turbulenzen » genannt, verhindern sollen.

Bekannterweise ist die Tendenz, dass sich in einem Rohr über dessen Strömungsquerschnitt einzeln und damit im obgenannten Sinn grossräumige Turbulenzen ergeben, desto höher, je genauer der Rohrquerschnitt kreisförmig ist. Um dies allenfalls zu verhindern, wird gemäss den Fig. 3a-3c der Strömungsquerschnitt des Erregungsstreckenrohres 1 von einer Kreisform abweichend ausgebildet, beispielsweise dreieckförmig, viereckig, mehreckig oder elliptisch.

In den Fig. 3 sind die dadurch entstehenden symmetrischen, nun « kleinräumigen » Turbulenzen qualitativ eingetragen. Diese födern eine gute Durchmischung des achsial das Erregungsstreckenrohr 1 nach Fig. 2b durchströmenden Gases.

In Fig. 4 ist eine Elektrodenanordnung am erfindungsgemässen Rohr, wie gemäss Fig. 2b, dargestellt. Am hier zweiteilig dargestellten Erregungsstreckenrohr 1 mit Teilen 1, 1a für den Laserstrahl mit der optischen Achse A, wird die Elektrode 96 als Hohlkegel ausgelegt. Dabei wird sie so dimensioniert, dass sie weningstens nahezu absatzfrei die Innenwandungen der Rohre 1 bzw. 1a verbindet.

Sie stützt sich, beispielsweise auf beidseitig angeordneten, achsial ausgerichteten Ringkragen 94 ab. Mit der dargestellten Ausbildung schmiegt sich eine derartige Elektrode an die di- bzw. convergierende Rohrwandung des Rohres, wie gemäss Fig. 2b, an.

## Patentansprüche

1. Verfahren zur Erhöhung der Leistung eines Axial-Gaslasers mit einem gasdurchströmten Erregungsrohr (1), dadurch gekennzeichnet, dass man eine an der Rohrwandung entstehende, den für ungehinderte Gasströmung wirksamen Querschnitt des Rohres vermindernde Grenzschicht (102) durch eine stetige Vergrösserung der Innenquerschnittsfläche (F(x)) des Erregungsrohres in Gasströmungsrichtung (x) unwirksam macht.

2. Verfahren nach Anspruch 1, dadurch gekennzeichnet, dass man die Vergrösserung nach dem Ausdruck

$$\ln\left[\frac{F}{F_1}\right]^2 = \int_0^\xi \left[\frac{1+M^2\cdot\kappa}{\frac{c_p\,T_{10}}{q_2}+\xi}\right] d\xi + \ln\left\{\left[\frac{1+\frac{\kappa-1}{2}M^2(x)}{1+\frac{\kappa-1}{2}M_1^2}\right]^{\frac{\kappa+1}{\kappa-1}} \cdot \left[\frac{M_1}{M}\right]^2\right\}$$

bestimmt, wobei mit Einführung der x-Abhängigkeit als Axialkoordinaten-Abhängigkeit bedeuten :

$M_1$ : die Machzahl an der engsten Querschnittsstelle $x_1$,

F(x) : die Leitungsquerschnittsfläche am Ort x,

$F_1$ : die engste Querschnittsfläche,

M(x) : die Machzahl am Ort x,

$T_{01}$ : die Gasruhetemperatur,

$\kappa(x)$ : den Isentropenexponenten am Ort x,

$c_p(x)$ : die spezifische Wärme des Gases am Ort x,

$q_2$ : die gesamthaft zugeführte Wärme,

$\xi(x)$ : die relativ zugeführte Wärme am Ort x, bezogen auf $q_2$.

3. Verfahren nach Anspruch 1 oder 2, dadurch gekennzeichnet, dass man die Querschnittsfläche (F(xx)) bei konstant zu haltendem Druck (p(x)) in Gasströmungsrichtung (x) linear zunehmend und für konstant zu haltende Temperatur (T(x)) exponentiell anwachsend wählt.

4. Axial-Gaslaser mit mindestens einem gasdurchströmten Erregungsstreckenrohr zur Ausführung des Verfahrens, nach einem der Ansprüche 1 bis 3, dadurch gekennzeichnet, dass das Erregungsstreckenrohr eine sich entlang seiner Länge mindestens abschnittsweise in Gasströmungsrichtung (x) stetig vergrössernde Innenquerschnittsfläche (F(x)) aufweist.

5. Axial-Gaslaser nach Anspruch 4, dadurch gekennzeichnet, dass die Vergrösserung der Erregungsrohr-Innenquerschnittsfläche in Gasströmungsrichtung linear oder exponentiell ist.

6. Axial-Gaslaser nach einem der Ansprüche 4 oder 5, dadurch gekennzeichnet, dass das Rohr mindestens einen Abschnitt umfasst, der einen von einer Kreisform abweichenden Innenquerschnitt (Fig. 3) aufweist.

7. Axial-Gaslaser nach einem der Ansprüche 4 bis 6, dadurch gekennzeichnet, das eine Elektrodenanordnung (96) zur elektrischen Anregung vorgesehen ist, die radial-absatz- und -spaltfrei am Umfang der Innenwandung (1a) des Rohres liegt.

8. Axial-Gaslaser nach Anspruch 7, dadurch gekennzeichnet, dass die Elektrodenanordnung eine konische Innenöffnung aufweist, zur Realisierung einer Innenquerschnittsänderung.

9. Erregungsstreckenrohr eines Axial-Gaslasers nach einem der Ansprüche 4 bis 8, dadurch gekennzeichnet, dass sich die Innenquerschnittsfläche des Rohres entlang seiner Länge in Gasströmungsrichtung (x) stetig vergrössert.

## Claims

1. A method for improving the power of an axial gas laser with an excitation tube through which a gas is flowing, characterized by making a boundary layer (102), which reduces the cross-section of the tube for unaffected gas flow, ineffective by steadily enlarging the inner cross-sectional area (F(x)) of said excitation tube in direction (x) of said gas flow.

2. The method according to claim 1, characterized by providing said enlarging according to the expression

$$\ln\left[\frac{F}{F_1}\right]^2 = \int_0^\xi \left[\frac{1+M^2\cdot\kappa}{\frac{c_p\,T_{10}}{q_2}+\xi}\right] d\xi + \ln\left\{\left[\frac{1+\frac{\kappa-1}{2}M^2(x)}{1+\frac{\kappa-1}{2}M_1^2}\right]^{\frac{\kappa+1}{\kappa-1}} \cdot \left[\frac{M_1}{M}\right]^2\right\}$$

wherein, with introducing the x-dependency as axial-coordinate dependency :

$M_1$ is the Mach number at the locus $x_1$ of the smallest cross-sectional area,

F(x) is the tube cross-sectional area at locus x,

$F_1$ is the smallest cross-sectional area,

M(x) is the Mach number at locus x,

$T_{01}$ is the stagnant gas temperature,

$\kappa(x)$ is the isentropic exponent at locus x,

$c_p(x)$ is the specific heat of said gas at locus x,

$q_2$ is the totally applied heat,

$\xi(x)$ is the heat locally applied at locus x, relative to $q_2$.

3. The method according to claim 1 or 2, characterized by enlarging said cross-sectional area (F(x)), for a pressure (p(x)) to be kept constant, in gas flow direction (x) linearly and for a temperature (T(x)) to be kept constant, exponentially.

4. An axial gas laser with at least one excitation tube through which a gas is flowing to perform the method according to one of the claims 1 to 3, characterized by the fact that said excitation tube comprises along its length an inner cross-sectional area (F(x)) which steadily increases at least along a part of its length and in gas-flow direction (x).

5. The axial gas laser according to claim 4, characterized by the fact that said increase of the excitation tubes inner cross-sectional area in gas-flow direction is linear or exponential.

6. The axial gas laser according to one of the claims 4 or 5, characterized by the fact that the tube comprises at least one section which comprises an inner cross-section (see fig. 3) which differs from circular form.

7. The axial gas laser according to one of the claims 4 to 6, characterized by the fact that there is provided an electrode arrangement (96) for an electrical excitement, which arrangement lies along the inner wall of said excitation tube without forming a radial abutment and gap.

8. The axial gas laser according to claim 7, characterized by the fact that the electrode arrangement comprises a conical inner opening to realize a changement of inner cross-section.

9. An excitation tube of an axial gas laser according to one of the claims 4 to 8, characterized by the fact that the inner cross-sectional area of the tube steadily rises in gas flow direction (x) and along its length.

**Revendications**

1. Procédé pour accroître la puissance d'un laser axial à gaz, avec un tube d'excitation (1) parcouru par un gaz, caractérisé par le fait que, par un accroissement progressif de la surface (F(x)) de la section droite intérieure du tube d'excitation, suivant la direction d'écoulement (x) du gaz, on rend inefficace une couche-limite (102) s'établissant contre la paroi du tube et réduisant la section efficace du tube pour l'écoulement non gêné du gaz.

2. Procédé selon revendication 1, caractérisé par le fait que l'on détermine l'accroissement selon l'expression

$$\ln\left[\frac{F}{F_1}\right]^2 = \int_0^\xi \left[\frac{1 + M^2 \cdot \kappa}{\dfrac{c_p\, T_{10}}{q_2} + \xi}\right] d\xi + \ln\left\{\left[\frac{1 + \dfrac{\kappa - 1}{2} M^2(x)}{1 + \dfrac{\kappa - 1}{2} M_1^2}\right]^{\frac{\kappa + 1}{\kappa - 1}} \cdot \left[\frac{M_1}{M}\right]^2\right\}$$

dans laquelle, en introduisant la dépendance par rapport à x en tant que dépendance de coordonnée axiale, les symboles signifient :

$M_1$ : nombre de Mach à l'endroit $x_1$ où la section droite est la plus étroite,

F(x) : surface de la section droite de conduite à l'endroit x,

$F_1$ : surface de section la plus étroite,

M(x) : nombre de Mach à l'endroit x,

$T_{o1}$ : température du gaz au repos,

$\kappa_x$ : exposant d'isentrope à l'endroit x,

$c_p$ : chaleur spécifique du gaz à l'endroit x,

$q_2$ : chaleur amenée en totalité,

$\xi(x)$ : chaleur relative amenée à l'endroit x, rapportée à $q_2$.

3. Procédé selon revendication 1 ou 2, caractérisé par le fait que la surface de la section droite (F(x)) est choisie linéairement croissante suivant la direction (x) d'écoulement du gaz, dans le cas d'une pression (p(x)) à maintenir constante, et exponentiellement croissante dans le cas d'une température (T(x)) à maintenir constante.

4. Laser axial à gaz, avec au moins un tube à trajet d'excitation parcouru par un gaz pour mettre en œuvre le procédé selon l'une des revendications 1 à 3, caractérisé par le fait que le tube à trajet d'excitation présente une surface de section droite intérieure (F(x)) qui, le long de sa longueur, sur au moins une portion, croît progressivement, suivant la direction (x) d'écoulement du gaz.

5. Laser axial à gaz selon revendication 4, caractérisé par le fait que la croissance de la suface de la section droite intérieure du tube d'excitation, suivant la direction d'écoulement du gaz, est linéaire ou exponentielle.

6. Laser axial à gaz selon l'une des revendications 4 ou 5, caractérisé par le fait que le tube présente au moins une portion à section droite intérieure non circulaire (figure 3).

7. Laser axial à gaz selon l'une des revendications 4 à 6, caractérisé par le fait qu'il est prévu, pour l'excitation électrique, un agencement d'électrode (96) qui se trouve à la périphérie de la paroi intérieure (1a), en ne formant ni interstice ni discontinuité radiale.

8. Laser axial à gaz, caractérisé par le fait que l'agencement d'électrode présente une ouverture intérieure conique pour réaliser une variation de section droite intérieure.

9. Tube à trajet d'excitation d'un laser axial à gaz selon l'une des revendications 4 à 8, caractérisé par le fait que, le long de la longueur du tube, la section droite intérieure de celui-ci croît progressivement suivant la direction (x) d'écoulement du gaz.

FIG.1

FIG. 2 a

FIG. 2 b

FIG. 2 c

FIG. 3a

FIG. 3b

1

1

1

FIG. 3c

A

94

94

1

94

94i

A

96

1a

FIG. 4